# EUROPEAN PATENT SPECIFICATION

(11) **EP 4 556 866 B1**
(45) Date of publication and mention of the grant of the patent: **22.04.2026**
(21) Application number: 24208356.6
(22) Date of filing: 23.10.2024
(51) Int. Cl.: G01F 25/20, G01F 23/284, F25J 1/00, F17C 3/00

(54) **METHOD AND SYSTEM OF PROOF TESTING ROLLOVER PROTECTION FUNCTIONALITY IN A TANK**
VERFAHREN UND SYSTEM ZUR ÜBERROLLSCHUTZFUNKTIONSPRÜFUNG IN EINEM TANK
PROCÉDÉ ET SYSTÈME DE TEST D'ÉPREUVE DE FONCTIONNALITÉ DE PROTECTION CONTRE LES TONNEAUX DANS UN RÉSERVOIR

(30) Priority: 15.11.2023 SE 2351305
(43) Date of publication of application: 21.05.2025
(73) Proprietor: Rosemount Tank Radar AB, 435 23 Mölnlycke (SE)
(72) Inventor: LUND MATTSSON, Victoria, 531 58 LIDKÖPING (SE); SWENSON, Christian, 517 96 HULTAFORS (SE); HOFFMANN, Christoffer, 438 54 HINDÅS (SE); HÅLL, Ola, 443 32 LERUM (SE)
(74) Representative: Kransell & Wennborg KB

(56) References cited:
- US-A1- 2010 011 663
- WANG ZHIHAO ET AL: "Thermal stratification and rollover phenomena in liquefied natural gas tanks", ENERGY, ELSEVIER, AMSTERDAM, NL, vol. 238, 9 September 2021 (2021-09-09), XP086874729, ISSN: 0360-5442, [retrieved on 20210909], DOI: 10.1016/J.ENERGY.2021.121994
- LI YUXING ET AL: "Simulating on rollover phenomenon in LNG storage tanks and determination of the rollover threshold", JOURNAL OF LOSS PREVENTION IN THE PROCESS INDUSTRIES, ELSEVIER, UNITED KINGDOM, vol. 37, 2 August 2015 (2015-08-02), pages 132 - 142, XP029262964, ISSN: 0950-4230, DOI: 10.1016/J.JLP.2015.07.007
- HONG WEI ET AL: "A cryogenic sensor based on Fiber Bragg Grating for Storage Monitoring of Liquefied Natural Gas", 2018 IEEE 14TH INTERNATIONAL CONFERENCE ON CONTROL AND AUTOMATION (ICCA), IEEE, 12 June 2018 (2018-06-12), pages 512 - 515, XP033388948, DOI: 10.1109/ICCA.2018.8444163

## Description

### Field of the Invention

The present invention relates to a rollover protection method and system. In particular, the present invention is aimed at proof testing a rollover detection method and system in a tank.

### Background of the Invention

Liquefied natural gas (LNG) can have different compositions depending on where the gas is sourced which gives it different characteristics. When gas from different sources is filled or mixed incorrectly in a storage tank, a phenomenon called stratification may occur due to differences in density and temperature. At a critical point when the composition of the stratified layers resembles each other, and near equilibrium, a rapid mixing will occur. This is known as a rollover incident. When a rollover occurs there is a large release of vapor which can damage or rupture the tank holding the gas, as well as emit large quantities of methane gas to the atmosphere.

In full containment storage tanks storing LNG, a system for rollover prediction (ROP) is required. Historically such a system has comprised a Level, Temperature and Density (LTD) device. The LTD device uses a probe to measure the fill level in the tank and to measure temperature and density at set interval points in the tank. These points are typically spaced 0.5 - 1.5 meters apart according to standards and guidelines. A measuring process is typically conducted once every 24 hours resulting in a profile. The profile measurement process for the LTD device typically takes 20 - 40 minutes depending on tank size and number of measurement points. From the measured data collected via the LTD device, indication of stratification can be witnessed. The stratification data is sent to a software which calculates and simulates the risk and magnitude of rollover, and the proper response can be initiated.

Accordingly, it is important to ensure that a functioning rollover protection system is in place in a tank storing LNG and it is thereby desirable to facilitate and enable the use of rollover protection systems. Document US 2010/011663 A1 discloses a method of detecting rollover in a field device system comprising a fill level sensor for determining a fill level of a product in a tank, and a sensor arrangement configured to determine at least one of temperature and density at multiple locations in the tank.

### Summary

In view of above-mentioned problems, it is an object of the present invention to provide a method and system for proof testing of a rollover-detection system in a field device system.

According to a first aspect of the invention, it is provided a method of proof testing a rollover detection system in a field device system comprising a fill level sensor for determining a fill level of a product in a tank, and a sensor arrangement configured to determine at least one of temperature and density at multiple locations in the tank, the method comprising: by a proof testing control unit, providing simulated temperature and/or density values for the sensor arrangement, the simulated temperature and/or density values being indicative of stratification of a product in the tank; by a system hub, acquiring a fill level of the product in the tank, and the simulated temperature and/or density values for the sensor arrangement, and providing the fill level, and the simulated temperature and/or density values to a rollover evaluation unit; and by the system hub, receiving, from the rollover evaluation unit, an output indicative of a risk of rollover in the tank resulting from the fill level and the simulated temperature and/or density values.

A field device should be understood to include any device that determines a process variable and communicates a measurement signal indicative of that process variable to a remote location. Examples of field devices include devices for determining process variables such as filling level, temperature, pressure, fluid flow etc. In the present disclosure, the field device system for example comprises field devices in the form of one or more fill level sensors, temperature sensors and/or density sensors.

The present invention is based on the realization that proof testing of a rollover detection system can be achieved by simulating temperature and/or density values for a sensor arrangement in a tank. The simulated temperature and/or density values can then be configured to represent stratification of liquefied natural gas (LNG) which in turn can be indicative of imminent rollover in the tank. Through the described method it is thereby possible to verify that a rollover detection system is functional without having to physically inspect or modify components of the tank. The rollover evaluation unit is also provided with level data from the fill level sensor.

In the present context, the proof testing control unit is responsible for providing temperature and/or density values for the LNG in the tank such that the temperature and/or density values are indicative of stratification in the tank. By using temperature and/or density values which are known to indicate a degree of stratification which could lead to rollover, it can be verified that the rollover evaluation unit provides the correct response warning of a rollover event. The values to use which are indicative of stratification can be based on empirical data, or they can be derived analytically based on known relations between temperature, density and stratification in an LNG tank. It is of course also possible to provide temperature and/or density values which do not indicate stratification to ensure that the response from the rollover evaluation is correct also for normal operating conditions.

The system hub here acts as a link between the sensor arrangement and the rollover evaluation unit, and the functionality of the system hub may vary depending on the application. For example, in a field device system operating in a plurality of tanks, additional intermediate hubs may be connected to a respective tank before being connected to the system hub. However, the described principle of simulating temperature and/or density values for proof testing the rollover evaluation unit is applicable also in larger systems comprising a plurality of tanks where a system in each tank may be tested and evaluated individually.

The rollover evaluation unit comprises software specifically dedicated to calculating the risk of rollover, and the output from the rollover evaluation unit may be in the form of a risk and magnitude of rollover, such as a number of days remaining until rollover can be expected. Details relating to how the rollover evaluation unit determines and evaluates the risk of rollover based on the described input data are known by the skilled person and will not be discussed in the present disclosure.

Various examples of the described invention thereby provide a simple, fast and cost-efficient way of proof testing a critical safety system of LNG tanks.

According to an example embodiment, the sensor arrangement comprises a plurality of temperature sensors spaced apart in the tank. The temperature sensors are distributed to detect and indicate if stratification occur in the tank.

According to an example embodiment, providing simulated temperature values indicative of stratification of a product in the tank comprises, by the proof testing control unit, providing a simulated temperature value to each of the plurality of temperature sensors; and by the system hub, acquiring the simulated temperature values from the plurality of temperature sensors. By providing the simulated temperature values directly to the temperature sensors, the functionality of the full communication path, from the temperature sensors to the system hub and further on to the rollover evaluation unit can be verified. It can thereby be detected if there is a fault in a temperature sensor or in the communication between the different components in the field device system.

According to an example embodiment the method may further comprise controlling each temperature sensor to only send a simulated temperature value to the system hub. The temperature sensor will thus not send a measured temperature value, and the system hub can be configured to operate in a normal operation mode also during the proof testing method.

According to an example embodiment, providing simulated temperature values indicative of stratification of a product in the tank may comprise, by the proof testing control unit, sending simulated temperature values for the plurality of temperature sensors to the system hub. By providing simulated temperature values directly to the system hub, the temperature sensors can be entirely bypassed. This may be advantageous in situations where it is desirable to only proof test the rollover evaluation unit as such, and/or a communication path between the system hub and the rollover evaluation unit.

According to an example embodiment, the method may further comprise setting the field device system in a simulation mode. The field device system or selected components of the field device system can then be made aware of that a simulation is ongoing where temperature and/or density values in different parts of the system do not necessarily correspond to actual measured values. The use of a simulation mode may be advantageous to avoid that other alerts or the like are triggered during simulation.

According to an example embodiment, the method may further comprise determining a level of the product in the tank; determining which of the plurality of temperature sensors are located in the product; and setting temperature values indicative of stratification in the tank for the temperature sensors located in the product.

According to an example embodiment, the method further comprises, by a pressure sensor arranged in the tank, determining a pressure in the tank and providing the determined pressure to the rollover evaluation unit. In some applications, the risk of rollover can me more accurately determined taking the pressure into account, or the rollover evaluation unit may require a measurement of the pressure.

According to an example embodiment, the sensor arrangement comprises an LTD (Level Temperature Density) profiling sensor. The LTD sensor can thereby measure the density at different locations in the tank to determine a density profile in the tank. Consequently, density values from the LTD sensor can be simulated and provided at various locations and to different units in the field device system as previously described.

According to a second aspect of the invention, there is provided a field device system comprising: a fill level sensor configured to determine a fill level of a product in a tank; a sensor arrangement arranged to determine at least one of a temperature and a density at multiple locations in the tank; a proof testing control unit configured to provide simulated temperature and/or density values for the sensor arrangement, the simulated temperature and/or density values being indicative of stratification of the product in the tank; and a system hub configured to: acquire a fill level of the product in the tank and the simulated temperature and/or density values for the sensor arrangement, provide the fill level and the simulated temperature and/or density values to a rollover evaluation unit; and receive, from the rollover evaluation unit, an output indicative of a risk of rollover in the tank based on the fill level, and the simulated temperature and/or density values.

According to an example embodiment, the sensor arrangement comprises a plurality of temperature sensors spaced apart in the tank, thereby enabling determination of a temperature profile in the tank. According to an example embodiment, the plurality of temperature sensors are arranged on a probe and distributed along the length of the probe. Preferably, a vertical distance between adjacent temperature sensors is lower than or equal to 1 meter to ensure sufficient resolution in order to be able to correctly evaluate the risk of rollover in the tank. In some embodiments, the temperature sensors may be arranged on a wall of the tank or on other structures in the tank.

According to an example embodiment, the proof testing control unit is configured to provide simulated temperature values to the plurality of temperature sensors, and the system hub is further configured to acquire the simulated temperature values from the plurality of temperature sensors.

According to an example embodiment, the proof testing control unit is configured to send simulated temperature values for the plurality of temperature sensors to the system hub.

According to an example embodiment, the fill level sensor is configured to perform a level measurement to determine a level of the product in the tank; and wherein the proof testing unit is configured to determine which of the plurality of temperature sensors are located in the product, and to set temperature values indicative of stratification in the tank for the temperature sensors located in the product.

According to an example embodiment, the plurality of temperature sensors are arranged on a probe and distributed along the length of the probe.

According to an example embodiment, the field device system according further comprises a pressure sensor arranged in the tank, the pressure sensor being configured to determine a pressure in the tank and to provide the determined pressure to the rollover evaluation unit.

According to an example embodiment, the sensor arrangement comprises an LTD (Level Temperature Density) profiling sensor.

Further effects and features of the second aspect of the invention are largely analogous to those described above in connection with the first aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 schematically illustrates an exemplary field device system in the form of a radar level gauge system;
Fig. 2 is a schematic block diagram of a field device system according to an embodiment of the invention;
Fig. 3 schematically illustrates an exemplary tank arrangement comprising a field device system according to an embodiment of the present invention; and
Fig. 4 is a flow chart outlining steps of a method according to an example embodiment of the invention.

### Detailed Description of Example Embodiments

In the present detailed description, various embodiments of the field device system and method of proof testing a rollover detection system in the field device system are mainly described with reference to a field device system arranged to determine the level of LNG in a stationary tank. However, the described system and method is equally suitable in other applications, such as in ship-based LNG tanks.

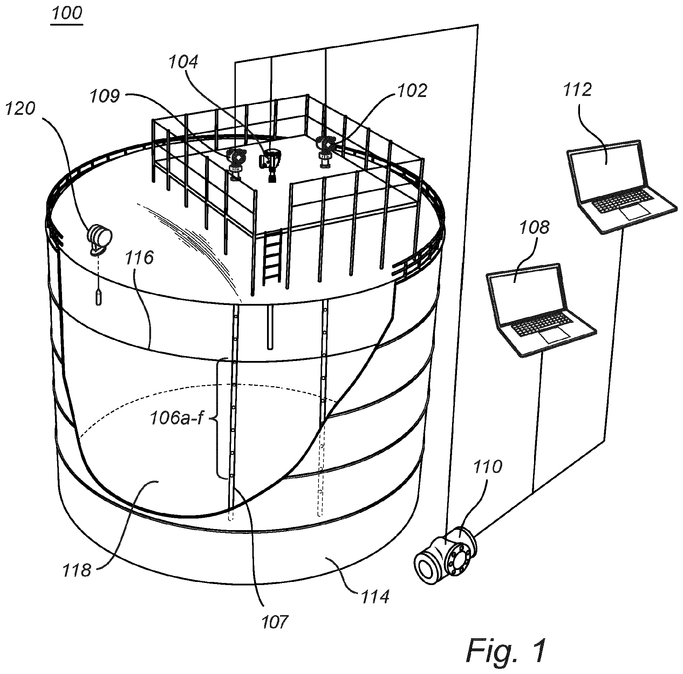

Fig. 1 schematically illustrates an example embodiment of a field device system 100 configured to determine properties of a product 118, here LNG, in a storage tank 114. The field device system 100 comprises a fill level sensor 102 configured to determine a fill level 116 of a product 118 in a tank 114, a pressure sensor 104 configured to determine a pressure in the tank 114, and a plurality of temperature sensors 106a-f each arranged to determine a temperature in the tank 114. The plurality of temperature sensors 106a-f are arranged on a probe 107 here illustrated having a probe head 109. The temperature sensors 106a-f are distributed along the length of the probe 107, preferably with a distance between adjacent sensors not exceeding 1 meter.

The field device system 100 further comprises a Level-Temperature-Density (LTD) sensor 120, sometimes referred to as an LTD-gauge 120. An LTD-sensor 120 is commonly provided in the form of a sensor arranged at the end of a wire so that the sensor can be lowered into the tank to measure the density at multiple locations in the tank, thereby acquiring a density profile.

It should be noted that a field device system for an LNG tank often comprise a number of additional field devices and sensors, but that the present description will focus on the components required for performing proof testing of a rollover detection system. Moreover, the functionality of the field device system will be described with reference to a sensor arrangement comprising a plurality of temperature sensors 106a-f configured to acquire a temperature. However, the described functionality of simulating measurement values and proof testing a rollover detection system is equally applicable for an LTD-sensor 120 configured to provide a density profile. The sensor arrangement may thereby comprise one or both of the plurality of temperature sensors 106a-f and the LTD-sensor 120. Accordingly, where it is described that a temperature sensor is used, temperature values are simulated, or a temperature profile is determined or simulated, temperature and density is in principle interchangeable. The selection of which values are simulated are determined by the required input of the rollover detection system and by the availability of sensors in the field device system, and it is possible to simulate either or both of a temperature and density profile.

The field device system 100 further comprises a proof testing control unit 108 configured to provide simulated temperature values for the plurality of temperature sensors 106a-f, the simulated temperature values being indicative of stratification of the product in the tank 114, and a system hub 110 configured to acquire a fill level 116 of the product 118 in the tank 114, optionally a pressure in the tank 114, and the simulated temperature values from the plurality of temperature sensors 106a-f. The fill level 116 of the tank can be determined by the fill level sensor 102 and the pressure in the tank 114 can be determined by the pressure sensor 104 which are both connected to the system hub 110. The system hub 110 is configured to connect and communicate with the different components of the field device system 100. Even though the system hub 110 is illustrated as a single component, the described functionality of the system hub 100 may equally well be distributed over several separate components, in particular in large field device systems comprising many devices. Moreover, in some cases redundancy may be desirable in which case several systems hubs 110 or similar devices may be arranged to operate in parallel. A system hub 110 may also be referred to and/or interchangeable with a so called tank hub.

The system hub 110 is configured to provide the fill level, the pressure, and the simulated temperature values to a rollover evaluation unit 112. The rollover evaluation unit 112 is then responsible for determining if the current conditions in the tank are indicative of a coming rollover event. For example, rollover evaluation unit 112 can estimate the number of days to an expected rollover event and the consequences of such an event based on current (simulated) stratification of the product in the tank.

The system hub 110 finally receives an output from the rollover evaluation unit 112 indicative of a risk of rollover in the tank based on the fill level, pressure and the simulated temperature values. If rollover is anticipated, appropriate measures for breaking up the stratification to avoid rollover can be taken.

Moreover, the described rollover evaluation unit 112 is preferably part of an overall rollover protection system which may comprise additional components and functions, such as alarm functions and tank control functionality. However, such additional features are known to the skilled person and will not be discussed in the present disclosure.

Each of the proof testing control unit 108, system hub 110 and the rollover evaluation unit 112 comprises processing circuitry configured to provide at least the functionality described herein. The processing circuitry may include a microprocessor, microcontroller, programmable digital signal processor or another programmable device. The processing circuitry may also, or instead, include an application specific integrated circuit, a programmable gate array or programmable array logic, a programmable logic device, or a digital signal processor. Where the processing circuitry includes a programmable device such as the microprocessor, microcontroller or programmable digital signal processor mentioned above, the processor may further include computer executable code that controls operation of the programmable device.

The rollover evaluation unit 112 may for example be a stationary or portable computer comprising the appropriate software for evaluating the risk of rollover, such as in commercially available rollover evaluation software. It is also possible to implement the functionality of both the proof testing control unit 108 and the rollover evaluation unit 112 in the same hardware unit, such as a computer. Moreover, a computer comprising the described functionality of the proof testing control unit 108 and the rollover evaluation unit 112 may also comprise other tank monitoring and control software.

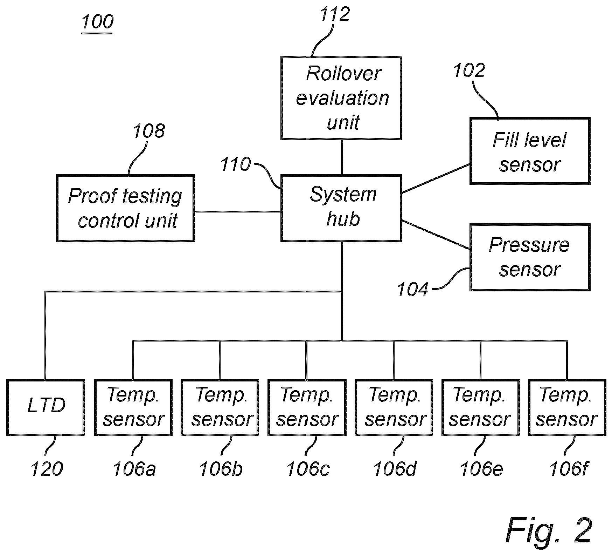

Fig. 2 is a block diagram schematically outlining the components of a field device system comprising the fill level sensor 102, the pressure sensor 104, the proof testing control unit 108, the system hub 110, the rollover evaluation unit 112, an LTD-sensor 120 and a plurality of temperature sensors 106a-f.

The proof testing control unit 108 may be configured to either provide simulated temperature values directly to the plurality of temperature sensors 106a-f such that the system hub 110 acquires the simulated temperature values from the plurality of temperature sensors 106a-f, or the proof testing control unit 108 may communicate simulated temperature values for the plurality of temperature sensors 106a-f directly to the system hub 110. In the first scenario where the output of the temperature sensors 106a-f is controlled, the full communication route between the temperature sensors 106a-f and system hub 110, and further to the rollover evaluation unit 112 is tested. In the second scenario where the simulated temperature values are provided directly to the system hub 110, it is not required that the system hub 110 communicates with the temperature sensors 106a-f.

Moreover, Fig. 2 illustrates the rollover evaluation unit 112 as being connected to both the proof testing control unit 108 and to the system hub 110 meaning that the rollover evaluation unit 112 can be configured to communicate with either of the proof testing control unit 108 and the system hub 110 separately, or with both units.

In an example embodiment, the fill level sensor 102 is configured to perform a level measurement to determine a level of the product 118 in the tank 114. The fill level 116 can then be provided to the proof testing control unit 108 to determine which of the plurality of temperature sensors are located in the product. The simulated temperature values can then be set to be indicative of stratification in the tank for the temperature sensors located in the product. Temperature sensors located above the fill level can then be disregarded by the rollover software.

The field device system 100 may also be configured to measure the pressure in the tank by the pressure sensor 104 since the rollover evaluation software typically requires a pressure to determine a risk of rollover. A cooled LNG-tank generally operates at atmospheric pressure which can then be verified and provided to the rollover evaluation unit 112.

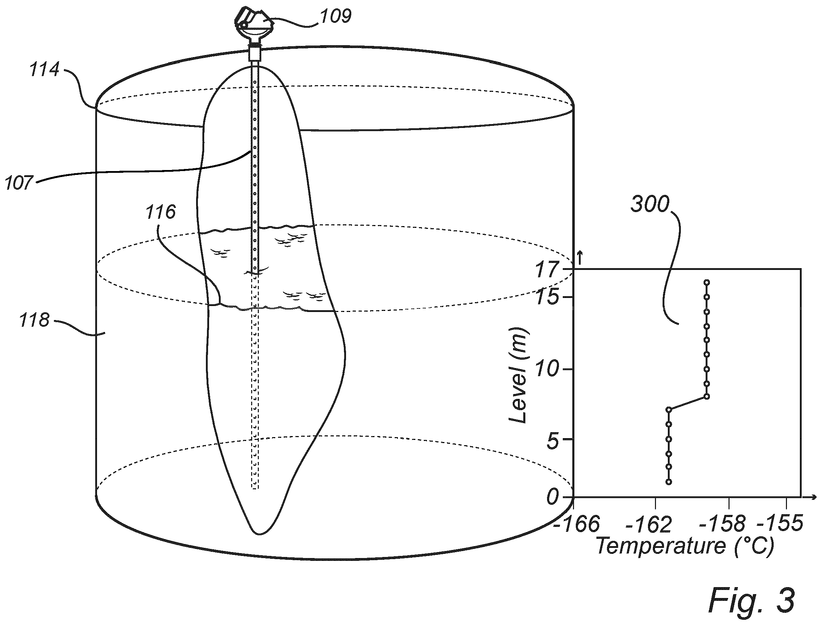

Fig. 3 schematically illustrates a probe 107 comprising a plurality of temperature sensors arranged in the tank 114. Fig. 3 also illustrates a temperature profile 300 of LNG where it can be seen that the temperature of the product 118 changes at a certain level in the tank 114, which is indicative of stratification of the product. As illustrated in Fig. 3, the colder product is at the bottom of the tank and the warmer product at the top of the tank. However, there are in principle no specific temperatures which are required to indicate stratification, it is primarily the identification of different layers having different temperatures which indicate a stratification in the tank. A simulated temperature profile indicative of stratification can thereby be set manually by a user with relative ease.

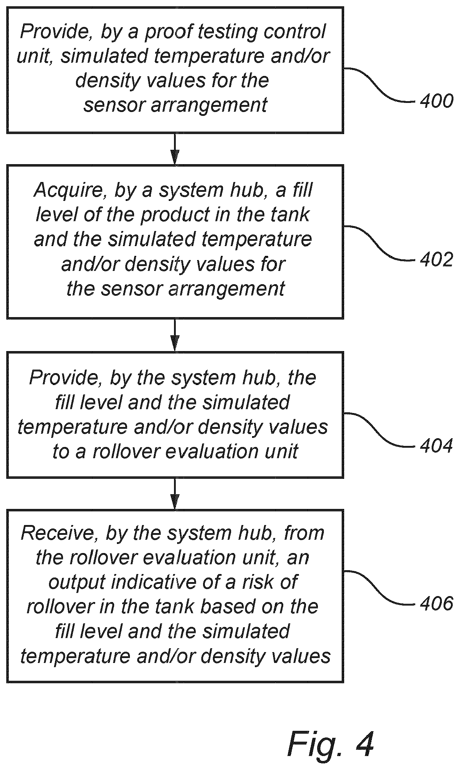

Fig. 4 is a flow chart outlining steps of a method according to an example embodiment of the invention performed by the above described field device system 100. The method first comprises providing 400, by the proof testing control unit 108, simulated temperature and/or density values for the sensor arrangement, where the simulated temperature and/or density values are indicative of stratification of a product in the tank.

Next, the system hub 110 acquires 402 a fill level 116 of the product 118 in the tank 114 and the simulated temperature and/or density values for the sensor arrangement, and provides 404 the fill level and the simulated temperature and/or density values to the rollover evaluation unit 112.

Finally, the system hub receives 406, from the rollover evaluation unit 118, an output indicative of a risk of rollover in the tank based on the fill level and the simulated temperature and/or density values.

The method may further comprise setting the field device system in a simulation mode where components and control units of the field device system is made aware of that a simulation is running, or at least that simulated temperature and/or density values are used. The simulation mode can be used to suppress alarms or other notifications which may otherwise be triggered based on the simulated values. Once the proof test procedure is completed, the field device system can enter a normal operating mode.

## Claims

1. A method of proof testing a rollover detection system in a field device system (100) comprising a fill level sensor (102) for determining a fill level (116) of a product (118) in a tank (114), and a sensor arrangement (106a-f) configured to determine at least one of temperature and density at multiple locations in the tank, the method comprising:
by a proof testing control unit (108), providing (400) simulated temperature and/or density values for the sensor arrangement, the simulated temperature and/or density values being indicative of stratification of a product in the tank;
by a system hub (110), acquiring (402) a fill level of the product in the tank, and the simulated temperature and/or density values for the sensor arrangement, and providing (404) the fill level, and the simulated temperature and/or density values to a rollover evaluation unit (112); and
by the system hub, receiving (406), from the rollover evaluation unit, an output indicative of a risk of rollover in the tank resulting from the fill level and the simulated temperature and/or density values.

2. The method according to claim 1, wherein the sensor arrangement comprises a plurality of temperature sensors spaced apart in the tank.

3. The method according to claim 2, wherein providing simulated temperature values indicative of stratification of a product in the tank comprises, by the proof testing control unit, providing a simulated temperature value to each of the plurality of temperature sensors; and
by the system hub, acquiring the simulated temperature values from the plurality of temperature sensors.

4. The method according to claim 2 or 3, further comprising controlling each temperature sensor to only send a simulated temperature value to the system hub.

5. The method according to claim 2, wherein providing simulated temperature values indicative of stratification of a product in the tank comprises, by the proof testing control unit, sending simulated temperature values for the plurality of temperature sensors to the system hub.

6. The method according to any one of claims 2 to 5, further comprising:
determining a level of the product in the tank;
determining which of the plurality of temperature sensors are located in the product; and
setting temperature values indicative of stratification in the tank for the temperature sensors located in the product.

7. A field device system (100) comprising:
a fill level sensor (102) configured to determine a fill level (116) of a product (118) in a tank (114);
a sensor arrangement (106a-f) arranged to determine at least one of a temperature and a density at multiple locations in the tank;
a proof testing control unit (108) configured to provide simulated temperature and/or density values for the sensor arrangement, the simulated temperature and/or density values being indicative of stratification of the product in the tank; and
a system hub (110) configured to: acquire a fill level of the product in the tank and the simulated temperature and/or density values for the sensor arrangement, provide the fill level and the simulated temperature and/or density values to a rollover evaluation unit (112); and receive, from the rollover evaluation unit, an output indicative of a risk of rollover in the tank based on the fill level, and the simulated temperature and/or density values.

8. The field device system according to claim 7, wherein the sensor arrangement comprises a plurality of temperature sensors spaced apart in the tank.

9. The field device system according to claim 7 or 8, wherein the proof testing control unit is configured to provide simulated temperature values to the plurality of temperature sensors, and the system hub is further configured to acquire the simulated temperature values from the plurality of temperature sensors.

10. The field device system according to claim 7 or 8, wherein the proof testing control unit is configured to send simulated temperature values for the plurality of temperature sensors to the system hub.

11. The field device system according to any one of claims 7 to 10, wherein the fill level sensor is configured to perform a level measurement to determine a level of the product in the tank; and wherein the proof testing unit is configured to determine which of the plurality of temperature sensors are located in the product, and to set temperature values indicative of stratification in the tank for the temperature sensors located in the product.

12. The field device system according to any one of claims 7 to 11, wherein the plurality of temperature sensors (106a-f) are arranged on a probe (107) and distributed along the length of the probe.

13. The field device system according to any one of claims 7 to 12, further comprising a pressure sensor arranged in the tank, the pressure sensor being configured to determine a pressure in the tank and to provide the determined pressure to the rollover evaluation unit.

14. The field device system according to any one of claims 7 to 13, wherein the sensor arrangement comprises an LTD, Level Temperature Density, profiling sensor.

## Patentansprüche

1. Verfahren zum Testen eines Überrollerkennungssystems in einem Feldgerätesystem (100), das einen Füllstandssensor (102) zum Bestimmen eines Füllstands (116) eines Produkts (118) in einem Tank (114) und eine Sensoranordnung (106a-f) umfasst, die eingerichtet ist, um Temperatur und/oder Dichte an mehreren Stellen in dem Tank zu bestimmen, wobei das Verfahren umfasst:
durch eine Teststeuereinheit (108), Bereitstellen (400) simulierter Temperatur- und/oder Dichtewerte für die Sensoranordnung, wobei die simulierten Temperatur- und/oder Dichtewerte eine Schichtung eines Produkts in dem Tank angeben;
durch einen System-Hub (110), Erfassen (402) eines Füllstands des Produkts in dem Tank und der simulierten Temperatur- und/oder Dichtewerte für die Sensoranordnung und Bereitstellen (404) des Füllstands und der simulierten Temperatur- und/oder Dichtewerte für eine Überroll-Auswertungseinheit (112); und
durch den System-Hub, Empfangen (406) von der Überroll-Auswertungseinheit einer Ausgabe, die ein Risiko eines Überrollens in dem Tank angibt, das sich aus dem Füllstand und den simulierten Temperatur- und/oder Dichtewerten ergibt.

2. Verfahren nach Anspruch 1, wobei die Sensoranordnung mehrere Temperatursensoren umfasst, die in dem Tank voneinander beabstandet sind.

3. Verfahren nach Anspruch 2, wobei das Bereitstellen simulierter Temperaturwerte, die eine Schichtung eines Produkts in dem Tank angeben, durch die Teststeuereinheit ein Bereitstellen eines simulierten Temperaturwerts für jeden der mehreren Temperatursensoren umfasst; und
durch den System-Hub, Erfassen der simulierten Temperaturwerte von den mehreren Temperatursensoren.

4. Verfahren nach Anspruch 2 oder 3, ferner umfassend Steuern jedes Temperatursensors, um nur einen simulierten Temperaturwert an den System-Hub zu senden.

5. Verfahren nach Anspruch 2, wobei das Bereitstellen simulierter Temperaturwerte, die eine Schichtung eines Produkts in dem Tank angeben, durch die Teststeuereinheit ein Senden simulierter Temperaturwerte für die mehreren Temperatursensoren an den System-Hub umfasst.

6. Verfahren nach einem der Ansprüche 2 bis 5, ferner umfassend:
Bestimmen eines Füllstands des Produkts in dem Tank;
Bestimmen, welche der mehreren Temperatursensoren sich in dem Produkt befinden; und
Festlegen von Temperaturwerten, die eine Schichtung in dem Tank für die Temperatursensoren, die sich in dem Produkt befinden, angeben.

7. Feldgerätesystem (100), umfassend:
einen Füllstandssensor (102), der eingerichtet ist, um einen Füllstand (116) eines Produkts (118) in dem Tank (114) zu bestimmen;
eine Sensoranordnung (106a-f), die angeordnet ist, um eine Temperatur und/oder eine Dichte an mehreren Stellen in dem Tank zu bestimmen;
eine Teststeuereinheit (108), die eingerichtet ist, um simulierte Temperatur- und/oder Dichtewerte für die Sensoranordnung bereitzustellen, wobei die simulierten Temperatur- und/oder Dichtewerte eine Schichtung des Produkts in dem Tank angeben; und
einen System-Hub (110), der eingerichtet ist zum: Erfassen eines Füllstands des Produkts in dem Tank und der simulierten Temperatur- und/oder Dichtewerte für die Sensoranordnung, Bereitstellen des Füllstands und der simulierten Temperatur- und/oder Dichtewerte an eine Überroll-Auswertungseinheit (112); und Empfangen einer Ausgabe, die ein Risiko eines Überrollens in dem Tank basierend auf dem Füllstand und den simulierten Temperatur- und/oder Dichtewerten angibt, von der Überroll-Auswertungseinheit.

8. Feldgerätesystem nach Anspruch 7, wobei die Sensoranordnung mehrere Temperatursensoren umfasst, die in dem Tank voneinander beabstandet sind.

9. Feldgerätesystem nach Anspruch 7 oder 8, wobei die Teststeuereinheit eingerichtet ist, um simulierte Temperaturwerte für die mehreren Temperatursensoren zu bereitzustellen, und der System-Hub ferner eingerichtet ist, um die simulierten Temperaturwerte von den mehreren Temperatursensoren zu erfassen.

10. Feldgerätesystem nach Anspruch 7 oder 8, wobei die Teststeuereinheit eingerichtet ist, um simulierte Temperaturwerte für die mehreren Temperatursensoren an den System-Hub zu senden.

11. Feldgerätesystem nach einem der Ansprüche 7 bis 10, wobei der Füllstandssensor eingerichtet ist, um eine Füllstandsmessung durchzuführen, um einen Füllstand des Produkts in dem Tank zu bestimmen; und wobei die Testeinheit eingerichtet ist, um zu bestimmen, welche der mehreren Temperatursensoren sich in dem Produkt befinden, und um Temperaturwerte festzulegen, die eine Schichtung in dem Tank für die Temperatursensoren, die sich in dem Produkt befinden, angeben.

12. Feldgerätesystem nach einem der Ansprüche 7 bis 11, wobei die mehreren Temperatursensoren (106a-f) auf einer Sonde (107) angeordnet und entlang der Länge der Sonde verteilt sind.

13. Feldgerätesystem nach einem der Ansprüche 7 bis 12, ferner umfassend einen Drucksensor, der in dem Tank angeordnet ist, wobei der Drucksensor eingerichtet ist, um einen Druck in dem Tank zu bestimmen und den bestimmten Druck an die Überroll-Auswertungseinheit zu liefern.

14. Feldgerätesystem nach einem der Ansprüche 7 bis 13, wobei die Sensoranordnung einen LTD-Profilierungssensor (Level Temperature Density - Füllstand Temperatur Dichte) umfasst.

## Revendications

1. Procédé de test de résistance d'un système de détection de renversement dans un système de dispositif de terrain (100) comprenant un capteur de niveau de remplissage (102) destiné à déterminer un niveau de remplissage (116) d'un produit (118) dans un réservoir (114), et un ensemble de capteurs (106a-f) configuré pour déterminer l'une au moins parmi la température et la densité à plusieurs endroits dans le réservoir, le procédé comprenant :
à l'aide d'une unité de commande de test de résistance (108), la fourniture (400) de valeurs de température et/ou de densité simulées pour l'ensemble de capteurs, les valeurs de température et/ou de densité simulées indiquant une stratification d'un produit dans le réservoir ;
à l'aide d'un concentrateur de système (110), l'acquisition (402) d'un niveau de remplissage du produit dans le réservoir et des valeurs de température et/ou de densité simulées pour l'ensemble de capteurs, et la fourniture (404) du niveau de remplissage et des valeurs de température et/ou de densité simulées à une unité d'évaluation de renversement (112) ; et
à l'aide du concentrateur de système, la réception (406), à partir de l'unité d'évaluation de renversement, d'une sortie indiquant un risque de renversement dans le réservoir, résultant du niveau de remplissage et des valeurs de température et/ou de densité simulées.

2. Procédé selon la revendication 1, dans lequel l'ensemble de capteurs comprend une pluralité de capteurs de température espacés dans le réservoir.

3. Procédé selon la revendication 2, dans lequel la fourniture de valeurs de température simulées indiquant une stratification d'un produit dans le réservoir comprend la fourniture d'une valeur de température simulée par l'unité de commande de test de résistance à chacun parmi la pluralité de capteurs de température ; et
l'acquisition, par le concentrateur de système, des valeurs de température simulées à partir de la pluralité de capteurs de température.

4. Procédé selon la revendication 2 ou 3, comprenant en outre la commande de chaque capteur de température pour envoyer uniquement une valeur de température simulée au concentrateur de système.

5. Procédé selon la revendication 2, dans lequel la fourniture de valeurs de température simulées indiquant une stratification d'un produit dans le réservoir comprend l'envoi, par l'unité de commande de test de résistance, de valeurs de température simulées pour la pluralité de capteurs de température au concentrateur de système.

6. Procédé selon l'une quelconque des revendications 2 à 5, comprenant en outre :
la détermination d'un niveau du produit dans le réservoir ;
la détermination des capteurs situés dans le produit parmi la pluralité de capteurs de température ; et
la définition de valeurs de température indiquant une stratification dans le réservoir pour les capteurs de température situés dans le produit.

7. Système de dispositif de terrain (100) comprenant :
un capteur de niveau de remplissage (102) configuré pour déterminer un niveau de remplissage (116) d'un produit (118) dans un réservoir (114) ;
un ensemble de capteurs (106a-f) conçu pour déterminer l'une au moins parmi la température et la densité à plusieurs endroits dans le réservoir ;
une unité de commande de test de résistance (108) configurée pour fournir des valeurs de température et/ou de densité simulées pour l'ensemble de capteurs, les valeurs de température et/ou de densité simulées indiquant une stratification d'un produit dans le réservoir ; et
un concentrateur de système (110) configuré pour : acquérir un niveau de remplissage du produit dans le réservoir et les valeurs de température et/ou de densité simulées pour l'ensemble de capteurs, fournir le niveau de remplissage et les valeurs de température et/ou de densité simulées à une unité d'évaluation de renversement (112) ; et recevoir, à partir de l'unité d'évaluation de renversement, une sortie indiquant un risque de renversement dans le réservoir sur la base du niveau de remplissage et des valeurs de température et/ou de densité simulées.

8. Système de dispositif de terrain selon la revendication 7, dans lequel l'ensemble de capteurs comprend une pluralité de capteurs de température espacés dans le réservoir.

9. Système de dispositif de terrain selon la revendication 7 ou 8, dans lequel l'unité de commande de test de résistance est configurée pour fournir des valeurs de température simulées à la pluralité de capteurs de température, et le concentrateur de système est en outre configuré pour acquérir les valeurs de température simulées à partir de la pluralité de capteurs de température.

10. Système de dispositif de terrain selon la revendication 7 ou 8, dans lequel l'unité de commande de test de résistance est configurée pour envoyer des valeurs de température simulées pour la pluralité de capteurs de température au concentrateur de système.

11. Système de dispositif de terrain selon l'une quelconque des revendications 7 à 10, dans lequel le capteur de niveau de remplissage est configuré pour effectuer une mesure de niveau afin de déterminer un niveau du produit dans le réservoir ; et dans lequel l'unité de test de résistance est configurée pour déterminer lesquels parmi la pluralité de capteurs de température se situent dans le produit, et pour définir des valeurs de température indiquant une stratification dans le réservoir pour les capteurs de température situés dans le produit.

12. Système de dispositif de terrain selon l'une quelconque des revendications 7 à 11, dans lequel la pluralité de capteurs de température (106a-f) sont disposés sur une sonde (107) et répartis sur la longueur de la sonde.

13. Système de dispositif de terrain selon l'une quelconque des revendications 7 à 12, comprenant en outre un capteur de pression disposé dans le réservoir, le capteur de pression étant configuré pour déterminer une pression dans le réservoir et pour fournir la pression déterminée à l'unité d'évaluation de renversement.

14. Système de dispositif de terrain selon l'une quelconque des revendications 7 à 13, dans lequel l'ensemble de capteurs comprend un capteur de profil de niveau/température/densité (LTD).
